# EUROPÄISCHE PATENTSCHRIFT

(11) **EP 0 556 764 B1**
(45) Veröffentlichungstag und Bekanntmachung des Hinweises auf die Patenterteilung: **29.11.1995**
(21) Anmeldenummer: 93102358.4
(22) Anmeldetag: 16.02.1993
(51) Int. Cl.: B60G 11/46, B60G 7/02

(54) **Luftfederachse**
Axle with pneumatic springs
Essieu à ressorts pneumatiques

(30) Priorität: 21.02.1992 DE 4205302
(43) Veröffentlichungstag der Anmeldung: 25.08.1993
(73) Patentinhaber: BPW Bergische Achsen Kommanditgesellschaft, 51674 Wiehl (DE)
(72) Erfinder: Colosimo, Mario, Keon Park, Victoria 3073 (AU)
(74) Vertreter: Stenger, Watzke & Ring Patentanwälte

(56) Entgegenhaltungen:
- EP-A- 0 353 347
- GB-A- 437 430
- GB-A- 2 094 393
- US-A- 4 907 814

## Beschreibung

Die Erfindung betrifft eine Luftfederachse für Anhänger mit als Federn ausgebildeten Lenkern, deren vordere Enden mit Federaugen auf in fahrgestellfesten Konsolen befestigten Lagerbolzen schwenkbar gelagert sind, auf deren rückwärtigen Enden die Luftfederbälge abgestützt sind und an denen die Achse zwischen den Konsolen und den Luftfederbälgen abgestützt ist, wobei zwischen jedem Lagerbolzen und dem Federauge eine Stahl-/Gummibuchse angeordnet ist.

Luftfederachsen mit einer Lenkerfederlagerung der vorstehend beschriebenen Gattung sind beispielsweise aus dem DE-U-87 16 234.2 bekannt. Dabei ist die im Federauge liegende Gummibuchse mit der auf dem Lagerbolzen liegenden Stahlbuchse durch Vulkanisation fest verbunden. Diese bekannten Lenkerfederlagerungen haben sich für den Normalbetrieb der Anhänger auf befestigten Straßen bewährt. Wenn aber die Anhänger außerhalb befestigter Straßen auf Pisten gefahren und dabei die Lenkerfedern stärker beansprucht werden, sind diese bekannten Lenkerfederlagerungen den erhöhten Beanspruchungen nicht mehr gewachsen.

Aus der US-A-49 07 814 ist eine selbstjustierende Lagerung für die Ausgleichsarme eines Verbundachsaggregates bekannt, bei der ein verlängerter Lagerbolzen in Verbindung mit Gummibuchsenverlängerungen benutzt wird. Bei dieser bekannten Lagerung sind auf den Innenseiten der Gummibuchsen aber keine geschlossenen, zylindrischen Stahlbuchsen anvulkanisiert, sondern durch Schlitze voneinander getrennte Stahlsegmente. Beim Vorspannen der Lagerbolzen können deshalb die Stahlsegmente den Lagerbolzen drehfest umspannen, so daß die von den Ausgleichsarmen in die Lagerung eingetragenen Quer- und Torsionskräfte zwangsläufig über den Lagerbolzen auf die fahrgestellfesten Konsolen übertragen werden. Aus diesem Grunde ist die bekannte Lagerung bei Lenkern für Luftfederachsen nicht anwendbar.

Der Erfindung liegt die Aufgabe zugrunde, eine einfache konstruierte Luftfederachse mit verbesserter Elastizität und verbessertem Verschleißverhalten der Lenkerfederlagerungen in den fahrgestellfesten Konsolen zu schaffen und die verbesserte Lenkerfederlagerung konstruktiv so auszubilden, daß sie auch nachgerüstet werden kann.

Die Lösung dieser Aufgabenstellung durch die Erfindung ist dadurch gekennzeichnet, daß die zylindrische Stahl-/Gummibuchse den Lagerbolzen mit Spiel umfaßt, daß in die Seitenwände jeder Konsole konzentrisch zum Lagerbolzen Aufnahmeringe eingesetzt sind, deren axiale Länge die Wandstärke der Konsole übersteigt und die nach außen überstehen, daß der Lagerbolzen um die axiale Länge beider Aufnahmeringe verlängert ist und daß in dem Ringraum zwischen dem Lagerbolzen und jedem Aufnahmering jeweils eine zusätzliche zylindrische Stahlbuchse und ein Gummiring angeordnet sind.

Bei der erfindungsgemäß weitergebildeten Lenkerfederlagerung sind die Elastizitäten der normalen Gummibuchse und der beiden äußeren Gummiringe in Reihe geschaltet, wobei diese Elastizitäten sowohl die radiale Elastizität als auch die Torsionselastizität betreffen. Es ergeben sich somit eine verbesserte Elastizität und ein verbessertes Verschleißverhalten. Diese Vorteile werden schon erreicht, wenn die beiden Gummiringe der Lenkerfederlagerung zylindrisch ausgebildet sind, können aber noch gesteigert werden, wenn die zusätzlichen Gummiringe als sich nach innen verjüngende Kegelstumpfringe ausgebildet werden und an ihren äußeren Stirnseiten, nämlich dort, wo die Ausschläge des Lagerbolzens bei Pistenfahrten am größten sind, ein größeres Gummivolumen haben als an ihren inneren Stirnseiten.

Bei einer praktischen Ausführungsform sind die Innenseite der Aufnahmeringe und die Außenseite der Gummiringe konisch ausgebildet. Auf dem Lagerbolzen sind vor der Stirnseite der Gummiringe liegende Spannscheiben angeordnet, mit denen die beiden Gummiringe unter leichter Vorspannung in die Aufnahmeringe hineingeschoben werden können.

Für die Nachrüstung bietet sich eine konstruktive Lösung an, bei der die axiale Länge der zusätzlichen Stahlbuchsen auf den Abstand zwischen den Spannscheiben und der normalen Stahlbuchse beschränkt ist. Es ist aber auch möglich, die zusätzlichen Stahlbuchsen auf ihrer Innenseite mit einem Ansatz zu versehen, der in einen Ringraum zwischen dem Lagerbolzen und der normalen Stahlbuchse eingreift, wenn ein im Durchmesser geringfügig kleinerer Lagerbolzen verwendet wird.

Die Gummiringe sind an ihrer innenliegenden Stirnseite vorzugsweise kegelig ausgebildet und weisen auf ihrer außenliegenden Stirnseite einen ihre Bohrung umgebenden Vorsprung auf, um Verdrängungsräume für das Gummivolumen im Fahrbetrieb zu schaffen.

Vorzugsweise werden die beiden Gummiringe einer Lenkerfederlagerung aus Hartgummi mit einem Härtegrad von ca. 70 shore hergestellt.

Weitere Einzelheiten und Vorteile der Erfindung ergeben sich aus der nachfolgenden Beschreibung von Zeichnungen, in denen eine bevorzugte Ausführungsform einer erfindungsgemäß ausgebildeten Luftfederachse schematisch in Ansichten und Schnitten dargestellt ist. In den Zeichnungen zeigen:

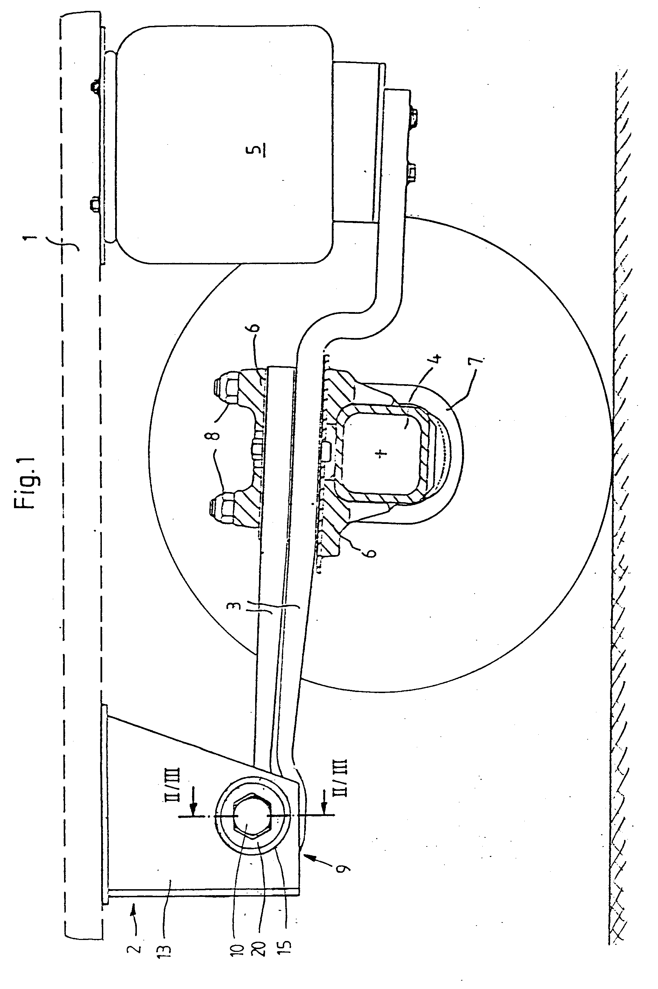

- Fig. 1: eine im Bereich einer Achseinbindung geschnittene Seitenansicht einer Luftfederachse;
- Fig. 2: einen Längsschnitt gemäß der Schnittlinie II - II in Fig. 1 durch eine erste Ausführungsform einer Lenkerfederlagerung und
- Fig. 3: einen Längsschnitt gemäß der Schnittlinie III - III in Fig. 1 durch eine zweite Ausführungsform einer Lenkerfederlagerung.

Unter einem Fahrzeugrahmen 1 ist eine Konsole 2 befestigt, an der als Federn ausgebildete Lenker 3 für eine Achse 4 schwenkbar gelagert sind. Zwischen dem Fahrzeugrahmen 1 und dem rückwärtigen Ende des unteren Lenkers 3 ist ein Luftfederbalg 5 angeordnet. Die Achse 4 ist mit Achslappen 6, Federbügeln 7 und Sicherungsmuttern 8 an den Lenkern 3 befestigt.

Die vorderen Enden der beiden Lenker 3 sind als Federaugen 9 ausgebildet und umgreifen einen Lagerbolzen 10. Auf dem Lagerbolzen 10 ist in dem Federauge 9 mit Spiel eine Stahlbuchse 11 mit einer anvulkanisierten Gummibuchse 12 angeordnet.

In die Seitenwände 13 und 14 der Konsole 2 sind Aufnahmeringe 15 eingesetzt, die eine konische Innenwand haben. Diese Aufnahmeringe 15 nehmen entsprechend geformte Gummiringe 16 auf, die an zusätzliche Stahlbuchsen 17 anvulkanisiert sind. Diese zusätzlichen Stahlbuchsen 17 umgreifen den Lagerbolzen 10 ebenfalls mit Spiel.

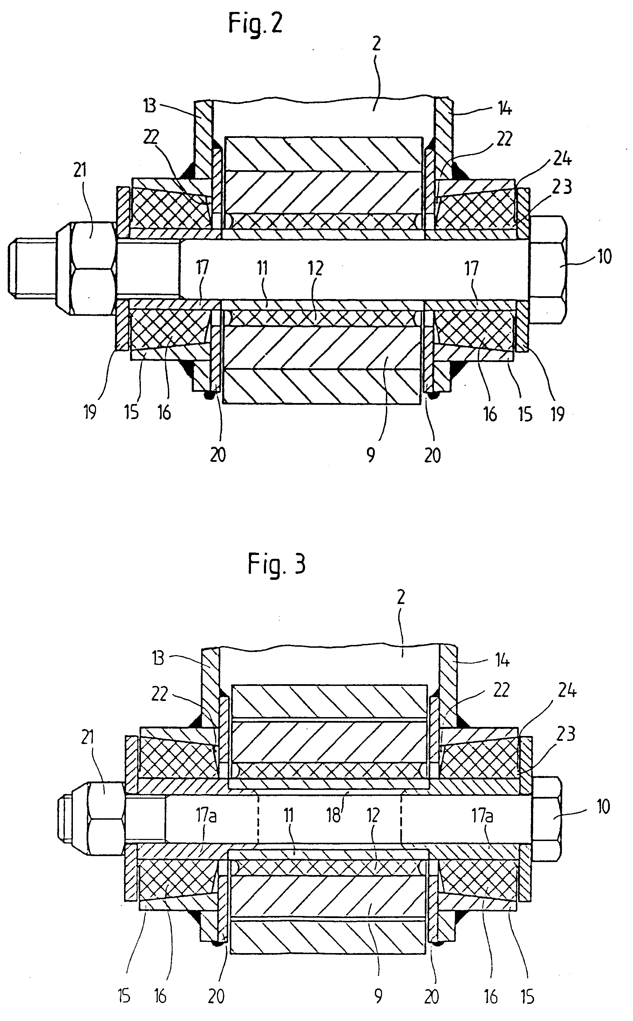

Beim Ausführungsbeispiel nach Fig. 2 liegen die zusätzlichen Stahlbuchsen 17 stumpf an den Stahlbuchsen 11 an. Beim Ausführungsbeispiel nach Fig. 3 greifen die zusätzlichen Stahlbuchsen 17a mit einem Ansatz in einen Ringraum 18 zwischen dem Lagerbolzen 10 und der Stahlbuchse 11 ein.

Vor den außenliegenden Stirnseiten der Gummiringe 16 sind Spannscheiben 19 angeordnet. Auf der Innenseite der Seitenwände 13,14 der Konsole 2 sind Verschleißscheiben 20 befestigt.

Die Gummiringe 16 und die zusätzlichen Stahlbuchsen 17 bzw. 17a werden mittels einer Mutter 21 jeweils zwischen der Stahlbuchse 11 und den Spannscheiben 19 leicht vorgespannt. Um genügend Freiraum für die Verdrängung des Materials der Gummiringe 16 im Fahrbetrieb zu schaffen, sind die Gummiringe 16 an ihrer inneren Stirnseite leicht kegelig ausgebildet, so daß dort ein Luftspalt 22 entsteht, während an der äußeren Stirnseite ein Vorsprung 23 ausgebildet ist, so daß sich dort ein Luftspalt 24 bildet.

Im Fahrbetrieb werden die Torsionsbeanspruchungen der Lenker 3 über ihre Federaugen 9 auf die Stahl-/Gummibuchsen 11,12 und von diesen über die Stahlbuchsen 17 bzw. 17a auf die Gummiringe 16 übertragen, deren zusätzliche Elastizität eine vorzeitige Zerstörung der Gummibuchsen 12 verhindert.

### Bezugszeichenliste:

- 1: Fahrzeugrahmen
- 2: Konsole
- 3: Lenker
- 4: Achse
- 5: Luftfederbalg
- 6: Achslappen
- 7: Federbügel
- 8: Sicherungsmutter
- 9: Federauge
- 10: Lagerbolzen
- 11: Stahlbuchse
- 12: Gummibuchse
- 13: Seitenwand
- 14: Seitenwand
- 15: Aufnahmering
- 16: Gummiring
- 17: Stahlbuchse
- 17a: Stahlbuchse
- 18: Ringraum
- 19: Spannscheibe
- 20: Verschleißscheibe
- 21: Mutter
- 22: Luftspalt
- 23: Vorsprung
- 24: Luftspalt

## Patentansprüche

1. Luftfederachse für Kraftfahrzeug-Anhänger mit als Federn ausgebildeten Lenkern (3), deren vordere Enden mit Federaugen (9) auf in fahrgestellfesten Konsolen (2) befestigten Lagerbolzen (10) schwenkbar gelagert sind, auf deren rückwärtigen Enden die Luftfederbälge (5) abgestützt sind und an denen die Achse (4) zwischen den Konsolen (2) und den Luftfederbälgen (5) abgestützt ist, wobei zwischen jedem Lagerbolzen (10) und dem Federauge (9) eine Stahl-/Gummibuchse (11,12) angeordnet ist,
**dadurch gekennzeichnet**,
daß die zylindrische Stahl-/Gummibuchse (11,12) den Lagerbolzen (10) mit Spiel umfaßt,
daß in die Seitenwände (13,14) jeder Konsole (2) konzentrisch zum Lagerbolzen (10) Aufnahmeringe (15) eingesetzt sind, deren axiale Länge die Wandstärke der Konsole (2) übersteigt und die nach außen überstehen,
daß der Lagerbolzen (10) um die axiale Länge beider Aufnahmeringe (15) verlängert ist und
daß in dem Ringraum zwischen dem Lagerbolzen (10) und jedem Aufnahmering (15) jeweils eine zusätzliche zylindrische Stahlbuchse (17) und ein Gummiring (16) angeordnet sind.

2. Luftfederachse nach Anspruch 1, dadurch gekennzeichnet, daß auf dem Lagerbolzen (10) vor der Stirnseite der Gummiringe (16) liegende Spannscheiben (19) angeordnet sind.

3. Luftfederachse nach Anspruch 1, dadurch gekennzeichnet, daß die Innenseite der Aufnahmeringe (15) und die Außenseite der Gummiringe (16) konisch ausgebildet sind.

4. Luftfederachse nach Anspruch 1, dadurch gekennzeichnet, daß die Gummiringe (16) an die zusätzlichen Stahlbuchsen (17) anvulkanisiert sind.

5. Luftfederachse nach Anspruch 1, dadurch gekennzeichnet, daß die zusätzlichen Stahlbuchsen (17a) mit einem Ansatz in einen Ringraum (18) zwischen Lagerbolzen (10) und Stahlbuchse (11) eingreifen.

6. Luftfederachse nach Anspruch 1, dadurch gekennzeichnet, daß die Gummiringe (16) auf ihrer innenliegenden Stirnseite kegelig ausgebildet sind.

7. Luftfederachse nach Anspruch 1, dadurch gekennzeichnet, daß die Gummiringe (16) auf ihrer außenliegenden Stirnseite einen ihre Bohrung umgebenden Vorsprung (23) aufweisen.

8. Luftfederachse nach Anspruch 1, dadurch gekennzeichnet, daß zwischen den Seitenwänden (13,14) jeder Konsole (2) und den Federaugen (9) Verschleißscheiben (20) angeordnet sind.

9. Luftfederachse nach Anspruch 8, dadurch gekennzeichnet, daß die Verschleißscheiben (20) eine Innenbohrung haben, deren Durchmesser dem Innendurchmesser des Federauges (9) entspricht.

## Claims

1. Pneumatic-spring axle for motor vehicle trailers having links (3) which are designed as springs, whose front ends are mounted pivotably by rolled ends (9) on bearing bolts (10) attached in brackets (2) fixed to the chassis, on whose rear ends the pneumatic spring bellows (5) are supported, and on which the axle (4) is supported between the brackets (2) and the pneumatic spring bellows (5), a steel/rubber bush (11, 12) being arranged between each bearing bolt (10) and the rolled end (9) of the spring, characterized in that the cylindrical steel/rubber bush (11, 12) encloses the bearing bolt (10) with clearance, in that receiving rings (15) are inserted in the side walls (13, 14) of each bracket (2) concentrically to the bearing bolt (10), the axial length of which receiving rings exceeds the wall thickness of the bracket (2) and which protrude outwards, in that the bearing bolt (10) is extended by the axial length of both receiving rings (15), and in that an additional cylindrical steel bush (17) and a rubber ring (16) are arranged in each case in the annular space between the bearing bolt (10) and each receiving ring (15).

2. Pneumatic-spring axle according to Claim 1, characterized in that tension discs (19), lying in front of the end face of the rubber rings (16), are arranged on the bearing bolt (10).

3. Pneumatic-spring axle according to Claim 1, characterized in that the inner side of the receiving rings (15) and the outer side of the rubber rings (16) are of conical design.

4. Pneumatic-spring axle according to Claim 1, characterized in that the rubber rings (16) are vulcanized onto the additional steel bushes (17).

5. Pneumatic-spring axle according to Claim 1, characterized in that the additional steel bushes (17a) engage with a protrusion into an annular space (18) between the bearing bolt (10) and the steel bush (11).

6. Pneumatic-spring axle according to Claim 1, characterized in that the rubber rings (16) are of spherical design on their inner end face.

7. Pneumatic-spring axle according to Claim 1, characterized in that the rubber rings (16) have a projection (23), surrounding their bore, on their outer end face.

8. Pneumatic-spring axle according to Claim 1, characterized in that anti-wear discs (20) are arranged between the side walls (13, 14) of each bracket (2) and the rolled ends (9) of the spring.

9. Pneumatic-spring axle according to Claim 8, characterized in that the anti-wear discs (20) have an inner bore whose diameter corresponds to the inside diameter of the rolled end (9) of the spring.

## Revendications

1. Essieu à ressorts pneumatiques pour remorques de véhicules, comprenant des bras oscillants (3) qui sont conçus sous forme de ressorts, dont les extrémités avant sont montées pivotantes, par l'intermédiaire d'yeux de ressorts (9), sur des pivots (10) fixés à des consoles (2) solidaires du châssis, dont les extrémités arrière supportent les coussins pneumatiques (5), et sur lesquels l'essieu (4) prend appui entre les consoles (2) et les coussins pneumatiques (5), un coussinet acier-caoutchouc (11, 12) étant disposé entre chaque pivot (10) et l'oeil (9) du ressort, caractérisé en ce que le coussinet cylindrique acier-caoutchouc (11, 12) entoure le pivot (10) avec un jeu, en ce que, dans les parois latérales (13, 14) de chaque console (2), sont insérés des logements annulaires (15) qui sont concentriques au pivot (10), dont la longueur axiale est supérieure à l'épaisseur de paroi de la console (2) et qui dépassent vers l'extérieur, en ce que le pivot (10) est prolongé de la longueur axiale des deux logements annulaires (15), et en ce qu'un coussinet cylindrique supplémentaire en acier (17) et un anneau en caoutchouc (16) sont respectivement disposés dans l'espace annulaire compris entre le pivot (10) et chaque logement annulaire (15).

2. Essieu à ressorts pneumatiques selon la revendication 1, caractérisé en ce que, sur le pivot (10), devant la face frontale des anneaux en caoutchouc (16), sont disposées des rondelles de serrage (19).

3. Essieu à ressorts pneumatiques selon la revendication 1, caractérisé en ce que la face intérieure des logements annulaires (15) et la face extérieure des anneaux en caoutchouc (16) sont de forme conique.

4. Essieu à ressorts pneumatiques selon la revendication 1, caractérisé en ce que les anneaux en caoutchouc (16) sont vulcanisés sur les coussinets supplémentaires en acier (17).

5. Essieu à ressorts pneumatiques selon la revendication 1, caractérisé en ce que les coussinets supplémentaires en acier (17a) pénètrent, par l'intermédiaire d'un prolongement, dans un espace annulaire (18) compris entre le pivot (10) et le coussinet en acier (11).

6. Essieu à ressorts pneumatiques selon la revendication 1, caractérisé en ce que les anneaux en caoutchouc (16) sont de forme conique au niveau de leur face frontale intérieure.

7. Essieu à ressorts pneumatiques selon la revendication 1, caractérisé en ce que les anneaux en caoutchouc (16) comportent, sur leur face frontale extérieure, une saillie (23) qui entoure leur trou.

8. Essieu à ressorts pneumatiques selon la revendication 1, caractérisé en ce que des rondelles d'usure (20) sont disposées entre les parois latérales (13, 14) de chaque console (2) et les yeux de ressorts (9).

9. Essieu à ressorts pneumatiques selon la revendication 8, caractérisé en ce que les rondelles d'usure (20) possèdent un trou intérieur dont le diamètre correspond au diamètre intérieur de l'oeil (9) du ressort.
